# FASCICULE DE BREVET EUROPEEN

(11) **EP 0 771 719 B1**
(45) Date de publication et mention de la délivrance du brevet: **22.03.2000**
(21) Numéro de dépôt: 96402240.4
(22) Date de dépôt: 21.10.1996
(51) Int. Cl.: B62D 43/04, B60R 11/06

(54) **Dispositif de rangement d'une roue de secours sous un plancher de véhicule automobile et comprenant des moyens d'accrochage d'un boîtier de rangement, notamment d'un cric**
Vorrichtung zum Verstauen eines Reserverades unter dem Boden eines Kraftfahrzeuges,enthält ausserdem Mittel zum Befestigen eines Aufbewahrungsbehälters,insbesondere für einen Wagenheber
Device for stowing a spare wheel under the floor of a motor vehicle comprising means for attaching a storage case, especially for a jack

(30) Priorité: 31.10.1995 FR 9512872
(43) Date de publication de la demande: 07.05.1997
(73) Titulaire: AUTOMOBILES PEUGEOT, 75116 Paris (FR); AUTOMOBILES CITROEN, 92200 Neuilly-sur-Seine (FR)
(72) Inventeur: Charton, René, 78990 Elancourt-Village (FR)
(74) Mandataire: Thinat, Michel

(56) Documents cités:
- US-A- 4 228 936

## Description

La présente invention concerne un dispositif de rangement d'une roue de secours sous un plancher de véhicule automobile.

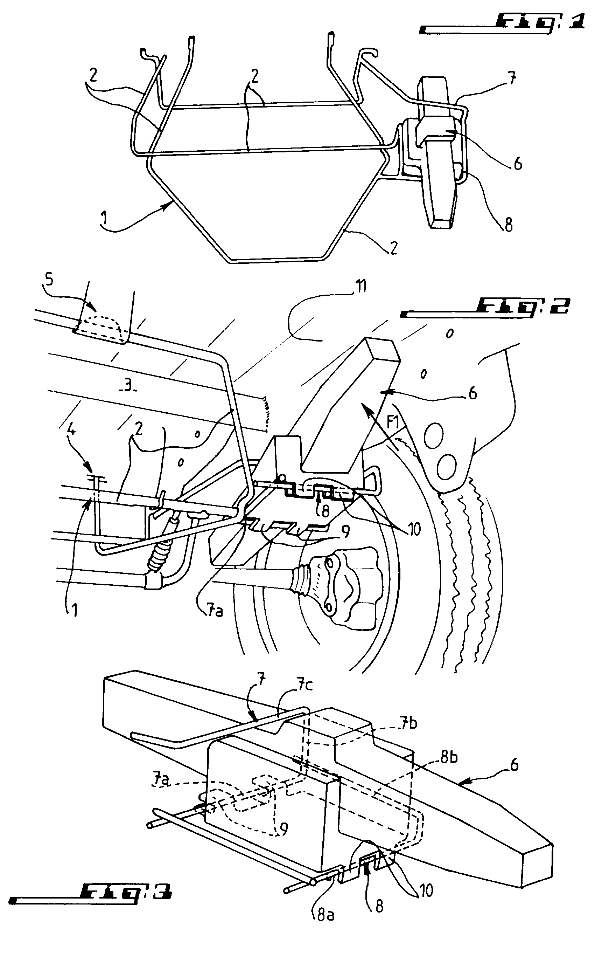

Les figures 1 à 5 représentent un tel dispositif de rangement comprenant un panier de support mobile 1 réalisé en fils métalliques 2 et apte à recevoir la roue de secours (non représentée). Le panier de support 1 est relié à la structure 3 du véhicule d'un côté par des moyens d'articulation (dont un seul est représenté en 4 en figure 2) autour d'un axe sensiblement horizontal et du côté opposé par des moyens de verrouillage déverrouillables 5, connus en soi. Le panier de support 1 est muni de moyens d'accrochage d'un boîtier 6 servant à ranger un objet, tel qu'un cric. Ces moyens d'accrochage comprennent deux fils métalliques 7, 8 solidaires du panier de support 1 et comprenant respectivement deux parties parallèles 7a, 8a sur lesquelles est fixé amoviblement le boîtier de rangement 6. A cet effet, le boîtier 6 comprend en partie inférieure de celui-ci deux paires de pinces élastiques 9, 10 dans lesquelles sont logées respectivement les deux parties de fils 7a, 8a par agrafage, comme représenté aux figures 2 et 3. Les deux parties de fils 7a, 8a sont réunies entre elles par une partie de fil 8b perpendiculaire aux parties 7a, 8a et faisant partie du fil 8. La partie 8b se trouve dans un plan sensiblement perpendiculaire aux deux parties de fils 7a, 8a en étant disposée au-dessus de ces dernières de façon à retenir latéralement le boîtier de rangement 6. La partie 8b est solidaire au voisinage de son extrémité libre, par exemple par soudage, d'une partie de fil coudée sensiblement à angle droit 7b du fil 7. La partie coudée 7b relie la partie d'accrochage 7a du fil 7 à une partie supérieure 7c du fil 7 située dans le même plan que la partie d'accrochage 7a. La partie supérieure 7c passe au-dessus du boîtier de rangement 6 et bifurque pour se raccorder au panier de support 1.

Ce dispositif connu présente l'inconvénient d'être aisément violable en position verrouillée du panier de support 1.

En effet, comme le montrent les figures 2 et 5, pour décrocher le boîtier de rangement 6 des fils d'accrochage 7a, 8a, il suffit d'exercer une force de poussée vers le haut suivant la flèche F1 sur le boîtier de rangement 6 dont la partie d'extrémité arrière est éloignée du plancher 11 d'une distance autorisant le basculement du boîtier de rangement 6 autour du fil d'accrochage 7a. Ainsi, cette force de poussée dégage tout d'abord les deux pinces élastiques sensiblement verticales 10 du fil d'accrochage 8a puis, comme représenté en figure 5, il suffit de tirer le boîtier de rangement 6 vers l'arrière pour dégager les deux autres pinces élastiques sensiblement horizontales 9 du fil d'accrochage 7a comme représenté sur cette même figure.

Autrement dit, toute personne malintentionnée peut facilement dérober le boîtier de rangement 6 et son contenu.

La présente invention a pour but d'éliminer l'inconvénient ci-dessus du dispositif connu en proposant un dispositif de rangement d'une roue de secours sous un plancher de véhicule automobile, comprenant un panier de support mobile apte à recevoir la roue et relié à la structure du véhicule d'un côté par des moyens d'articulation autour d'un axe sensiblement horizontal et d'un autre côté par des moyens de verrouillage, le panier de support étant muni de moyens d'accrochage d'un boîtier servant à ranger un objet tel qu'un cric, et qui est caractérisé en ce que les moyens d'accrochage sont agencés de manière à permettre de positionner le boîtier dans un espace situé entre le panier de support et un élément fixe de carrosserie de sorte que le boîtier ne puisse être extrait lorsque le panier de support est en position de verrouillage.

Les moyens d'accrochage sont agencés de sorte que le boîtier ne peut être extrait que par un mouvement latéral de rotation suivi d'un mouvement longitudinal de translation, en position déverrouillée du panier de support.

Le panier de support est réalisé en fil métallique tel que du fil d'acier et les moyens d'accrochage du boîtier sont réalisés en un fil métallique, de préférence analogue à celui du panier de support.

Le boîtier de rangement du cric comprend une protubérance munie de deux groupes de supports constitués chacun de deux éléments définissant une ouverture dans laquelle le fil d'accrochage peut pénétrer, les deux ouvertures des deux groupes étant disposées respectivement suivant deux plans perpendiculaires.

De préférence, chaque élément d'un groupe de supports est agencé en forme de pince élastique dans laquelle le fil d'accrochage peut être maintenu par agrafage.

Les éléments des groupes de supports sont orientés de sorte que les deux parties du fil d'accrochage supportant chacun des groupes soient parallèles entre elles.

Les deux parties précitées du fil d'accrochage sont reliées entre elles par une autre partie du fil d'accrochage en forme de U enserrant la protubérance du boîtier du cric et située dans un plan perpendiculaire aux deux parties du fil d'accrochage.

De préférence, les moyens d'accrochage du boîtier sont réalisés à partir d'un fil unique.

Le fil d'accrochage présente une partie passant au-dessus de l'élément supérieur de chacun des groupes de supports.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 représente, en position déposée, un panier de support d'une roue de secours d'un véhicule automobile auquel est accroché un boîtier de rangement conformément à l'art antérieur.

La figure 2 est une vue en perspective de dessous d'une partie arrière d'un véhicule automobile représentant le panier de support et son boîtier de rangement en position verrouillée.

La figure 3 est une vue en perspective montrant la façon dont le boîtier de rangement est accroché au panier de support suivant l'art antérieur.

La figure 4 est une vue en perspective semblable à celle de la figure 3 représentant plus clairement la phase de décrochage du boîtier de rangement en position verrouillée du panier de support.

La figure 5 est une vue en perspective semblable à celle de la figure 2 et représentant le désengagement complet du boîtier de rangement de son panier de support en position verrouillée.

La figure 6 est une vue semblable à celle de la figure 1 et représentant l'accrochage du boîtier de rangement au panier de support conformément à l'invention.

La figure 7 est une vue du boîtier de rangement suivant la flèche VII de la figure 6.

La figure 8 est une vue en perspective semblable à celle de la figure 2 et montrant le panier de support de l'invention avec le boîtier de rangement en position verrouillée.

La figure 9 est une vue en perspective montrant plus clairement la façon dont le boîtier de rangement est accroché au panier de support.

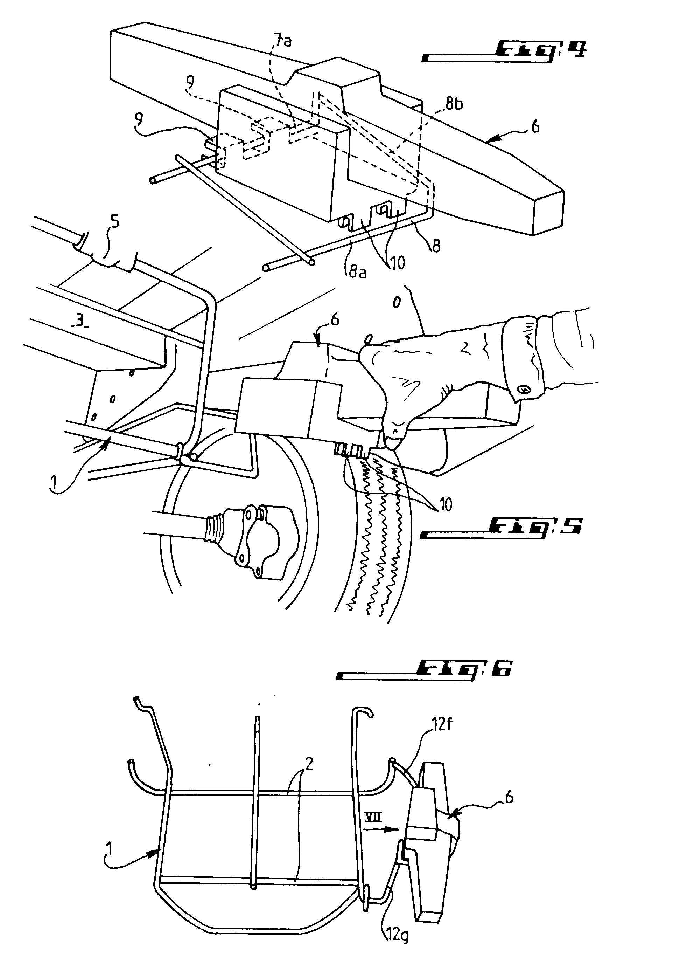

Les éléments communs entre le dispositif de rangement des figures 1 à 5 et le dispositif de rangement de l'invention tel que représenté aux figures 6 à 9 portent les mêmes références et ne seront pas à nouveau détaillés.

Selon le dispositif de rangement représenté aux figures 6 à 9, les moyens d'accrochage du boîtier de rangement 6 sont agencés de manière à permettre de positionner le boîtier 6 dans un espace situé entre le panier de support 1 et un élément fixe de carrosserie, qui sera défini ultérieurement, de sorte que le boîtier 6 ne puisse être extrait lorsque le panier de support 1 est en position de verrouillage.

A cet effet, les moyens d'accrochage du boîtier 6 sont réalisés à partir d'un fil métallique 12, de préférence unique, tel que du fil d'acier et analogue à celui du panier de support 1.

Le boîtier de rangement 6 comprend une protubérance 6a munie de deux groupes de supports respectivement 13 et 14, le groupe 13 comprenant deux éléments avant 15 définissant une ouverture dans laquelle une partie 12a du fil d'accrochage 12 peut pénétrer, tandis que l'autre groupe 14 comprend deux éléments arrière 16 définissant une ouverture dans laquelle une partie 12b du fil d'accrochage 12 peut pénétrer. Les ouvertures des deux paires d'éléments 15, 16 sont disposées respectivement suivant deux plans perpendiculaires avec les deux éléments de support avant 15 s'étendant sensiblement suivant une direction parallèle à l'axe longitudinal du véhicule.

De préférence, les éléments de support 15, 16 sont agencés en forme de pinces élastiques dans lesquelles les parties 12a et 12b du fil 12 peuvent être maintenues par agrafage. De plus, les paires d'éléments 15, 16 sont orientées de sorte que les deux parties 12a, 12b du fil d'accrochage 12 engagées dans ceux-ci soient parallèles entre elles et sont reliées entre elles par une autre partie 12c du fil 12 en forme de U enserrant la protubérance 6a du boîtier de rangement 6, la partie en U 12c étant située dans un plan perpendiculaire aux deux parties 12a, 12b du fil d'accrochage 12. Enfin, le fil d'accrochage 12 comprend deux parties 12d, 12e passant au-dessus respectivement des deux éléments supérieurs 15, 16 de chacun des groupes de support et ces parties 12d, 12e du fil 12 sont prolongées par deux branches 12f, 12g solidaires du panier de support 1.

Lorsque le panier de support 1 est déverrouillé de la structure du véhicule afin d'accéder à la roue de secours, le boîtier de rangement 6 peut être extrait du panier 1 en exerçant une force de poussée latérale sur l'extrémité arrière du boîtier 6 suivant le sens indiqué par la flèche transversale F1 de façon à décrocher les deux éléments de support 16 de la partie 12b du fil d'accrochage 12. Ceci se traduit par un mouvement latéral de rotation du boîtier 6 autour de la partie 12a du fil d'accrochage 12. Il suffit ensuite d'exercer sur le boîtier 6 une force de traction longitudinale suivant le sens indiqué par la flèche F2 pour décrocher les deux éléments de support 15 de la partie 12a du fil d'accrochage 12 et libérer ainsi le boîtier de rangement 6 afin d'accéder au cric.

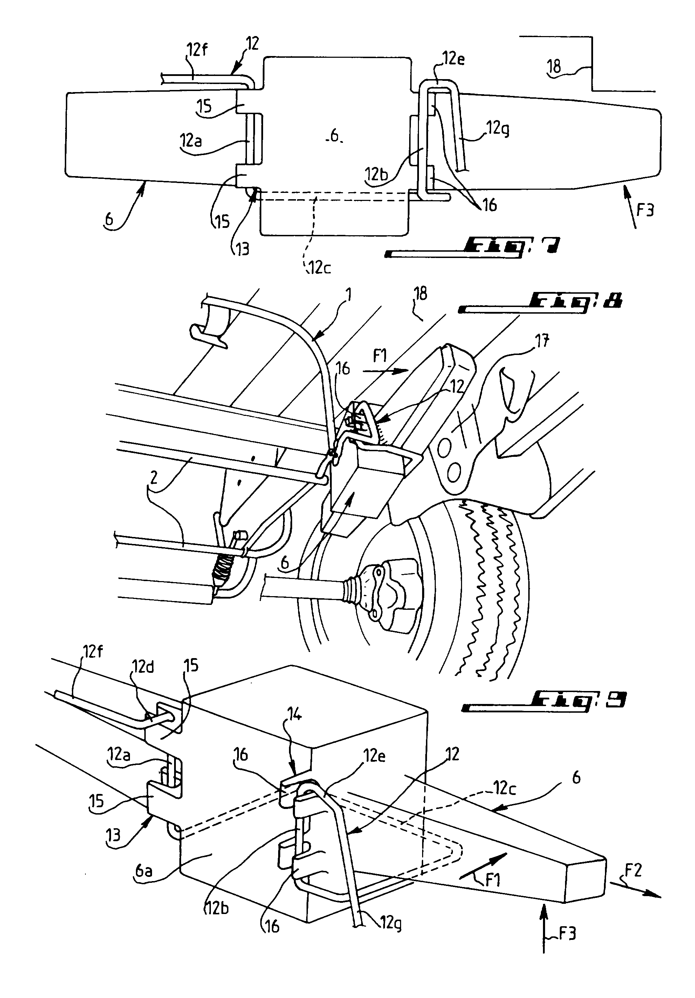

Lorsque le panier de support 1 occupe sa position verrouillée à la structure du véhicule, le mouvement latéral suivant la flèche F1 du boîtier 6 est impossible car, comme représenté en figure 8, le boîtier 6 bute sur l'élément de carrosserie qui est, dans le cas présent, le support 17 de l'anneau de remorquage (non représenté). A cette position verrouillée du panier de support 1, il est également impossible de décrocher le boîtier 6 par poussée suivant la flèche F3 car la partie d'extrémité arrière du boîtier 6 bute contre un autre élément de carrosserie, constitué dans le cas présent par la traverse arrière 18 (voir figures 7 et 8). Enfin, toute tentative d'extraire le boîtier 6 en tirant sur celui-ci vers l'arrière du véhicule sera vouée à l'échec du fait que les deux éléments arrière 14 du boîtier 6 butent contre la partie fixe 12b du fil d'accrochage 12.

## Revendications

1. Dispositif de rangement d'une roue de secours sous un plancher de véhicule automobile, comprenant un panier de support mobile (1) apte à recevoir la roue et relié à la structure du véhicule d'un côté par des moyens d'articulation (4) autour d'un axe sensiblement horizontal et d'un autre côté par des moyens de verrouillage (5), le panier de support (1) étant muni de moyens d'accrochage (12) d'un boîtier (6) servant à ranger un objet tel qu'un cric, caractérisé en ce que les moyens d'accrochage (12) sont agencés de manière à permettre de positionner le boîtier (6) dans un espace situé entre le panier de support (1) et un élément fixe de carrosserie (17 ; 18) de sorte que le boîtier (6) ne puisse être extrait lorsque le panier de support (1) est en position de verrouillage.

2. Dispositif selon la revendication 1, caractérisé en ce que les moyens d'accrochage (12) sont agencés de sorte que le boîtier (6) ne peut être extrait que par un mouvement latéral de rotation suivi d'un mouvement longitudinal de translation en position déverrouillée du panier de support (1).

3. Dispositif selon la revendication 1 ou 2, caractérisé en ce que le panier de support (1) est réalisé en fil métallique tel que du fil d'acier.

4. Dispositif selon la revendication 3, caractérisé en ce que les moyens d'accrochage (12) du boîtier (6) sont réalisés en un fil métallique, de préférence analogue à celui (2) du panier de support (1).

5. Dispositif selon la revendication 4, caractérisé en ce que le boîtier de rangement du cric (6) comprend une protubérance (6a) munie de deux groupes de supports (13, 14) constitués chacun de deux éléments (15, 16) définissant une ouverture dans laquelle le fil d'accrochage (12) peut pénétrer, les ouvertures des deux groupes (13, 14) étant disposées respectivement suivant deux plans perpendiculaires.

6. Dispositif selon la revendication 5, caractérisé en ce que chaque élément (15, 16) d'un groupe de supports (13, 14) est agencé en forme de pince élastique dans laquelle le fil d'accrochage (12) peut être maintenu par agrafage.

7. Dispositif selon la revendication 5 ou 6, caractérisé en ce que les éléments (15, 16) des groupes de supports (13, 14) sont orientés de sorte que les deux parties (12a, 12b) du fil d'accrochage (12) supportant chacun des groupes soient parallèles entre elles.

8. Dispositif selon la revendication 7, caractérisé en ce que les deux parties (12a, 12b) précitées du fil d'accrochage (12) sont reliées entre elles par une autre partie du fil d'accrochage (12c) en forme de U enserrant la protubérance (6a) du boîtier de rangement du cric (6) et située dans un plan perpendiculaire aux deux parties (12a, 12b) du fil d'accrochage (12).

9. Dispositif selon l'une des revendications 4 à 8, caractérisé en ce que les moyens d'accrochage (12) du boîtier (6) sont réalisés à partir d'un fil unique.

10. Dispositif selon l'une des revendications 5 à 9, caractérisé en ce que le fil d'accrochage (12) présente une partie (12d, 12e) passant au-dessus de l'élément supérieur (15, 16) de chacun des groupes de supports (13, 14).

## Patentansprüche

1. Vorrichtung zum Verstauen eines Reserverades unter dem Boden eines Kraftfahrzeuges, einen mobilen Stützkorb (1) umfassend, der dazu geeignet ist, das Rad aufzunehmen und mit der Struktur des Kraftfahrzeuges auf der einen Seite durch Artikulationsmittel (4) um eine deutlich horizontale Achse verbunden ist und auf der anderen Seite durch Verriegelungsmittel (5), wobei der Stützkorb (1) mit Befestigungsmitteln (12) einer Box (6) ausgestattet ist, der dazu dient, einen Gegenstand wie einen Wagenheber zu verstauen, dadurch gekennzeichnet, daß die Befestigungsmittel (12) derart angeordnet sind, daß sie die Positionierung der Box (6) in einem Raum zwischen dem Stützkorb (1) und einem festen Element der Karosserie (17; 18) derart erlauben, daß die Box (6) nicht herausgenommen werden kann, wenn der Stützkorb (1) in verriegelter Position ist.

2. Vorrichtung gemäß Anspruch 1, dadurch gekennzeichnet, daß die Befestigungsmittel (12) derart angeordnet sind, daß die Box (6) bei entriegelter Stellung des Stützkorbes (1) nur durch eine laterale Rotationsbewegung, gefolgt von einer Translationsbewegung in Längsrichtung herausgenommen werden kann.

3. Vorrichtung gemäß Anspruch 1 oder 2, dadurch gekennzeichnet, daß der Stützkorb (1) aus Metalldraht wie z. B. Stahldraht realisiert ist.

4. Vorrichtung gemäß Anspruch 3, dadurch gekennzeichnet, daß die Befestigungsmittel (12) der Box (6) aus einem Metalldraht realisiert sind, vorzugsweise analog zu dem (2) des Stützkorbes (1).

5. Vorrichtung gemäß Anspruch 4, dadurch gekennzeichnet, daß der Aufbewahrungsbehälter für den Wagenheber (6) eine Protuberanz (6a) umfaßt und mit zwei Stützgruppen (13,14) versehen ist, die jede aus zwei Elementen (15, 16) bestehen, die eine Öffnung definieren, in die der Befestigungsdraht (12) eindringen kann, wobei die Öffnungen der beiden Gruppen (13, 14) jeweils gemäß zwei senkrechten Ebenen angeordnet sind.

6. Vorrichtung gemäß Anspruch 5, dadurch gekennzeichnet, daß jedes Element (15, 16) einer Stützgruppe (13, 14) in Form einer elastischen Klemme angebracht ist, in der der Befestigungsdraht (12) per Klammerung festgehalten werden kann.

7. Vorrichtung gemäß Anspruch 5 oder 6, dadurch gekennzeichnet, daß die Elemente (15, 16) der Stützgruppen (13, 14) derart ausgerichtet sind, daß die zwei Teile (12a, 12b) des Befestigungsdrahtes (12), die jede der Gruppen stützen, parallel zueinander sind.

8. Vorrichtung gemäß Anspruch 7, dadurch gekennzeichnet, daß die zwei vorgenannten Teile (12a, 12b) des Befestigungsdrahtes (12) untereinander durch einen anderen Teil (12c) des Befestigungdrahtes in einer die Protuberanz (6a) des Aufbewahrungsbehälters für den Wagenheber (6) einspannenden U-Form verbunden sind und sich in vertikaler Achse zu den beiden Teilen (12a, 12b) des Befestigungsdrahtes (12) befinden.

9. Vorrichtung gemäß Ansprüchen 4 bis 8, dadurch gekennzeichnet, daß die Befestigungsmittel (12) der Box (6) aus einem einzigen Draht realisiert sind.

10. Vorrichtung gemäß Anspruch 5 bis 9, dadurch gekennzeichnet, daß der Befestigungsdraht (12) einen Teil (12d, 12e) aufweist, der über dem oberen Element (15, 16) jeder der Stützgruppen (13, 14) verläuft.

## Claims

1. Device for stowing a spare wheel under the floor of a motor vehicle including a mobile support basket (1) for housing the wheel and connected to the structure of the vehicle on one side by articulation means (4) around an approximately horizontal axis, and on the other side by locking means (5), the support basket (1) being provided with means (12) for attaching a case (6) used for storing an object such as a jack, characterised in that the attaching means (12) are fitted so as to allow positioning of the case (6) in a space situated between the support basket (1) and a fixed body element (17;18) so that the case cannot be extracted when the support basket (1) is in the locking position.

2. Device according to claim 1, characterised in that the attaching means (12) are disposed so that the case (6) can only be extracted via a side rotation movement followed by a longitudinal translation movement in an unlocked position of the support basket (1).

3. Device according to claim 1 or 2, characterised in that the support basket (1) is made of a metal wire, such as a steel wire.

4. Device according to claim 3, characterised in that the attaching means (12) of the case (6) are embodied by a metal wire, preferably similar to that (2) of the support basket (1).

5. Device according to claim 4, characterised in that the jack stowing case (6) includes a protuberance (6a) fitted with two sets of supports (13, 14) each made up of two elements (15, 16) defining an opening into which the hooking wire (12) can penetrate, the openings of the two sets (13, 14) being respectively disposed along two perpendicular planes.

6. Device according to claim 5, characterised in that each element (15, 16) of a support set (13, 14) is disposed in the shape of an elastic retainer in which the hooking wire (12) can be supported by means of hooking.

7. Device according to claim 5 or 6, characterised in that the elements (15, 16) of the support sets (13, 14) are orientated so that the two portions (12a, 12b) of the attaching wire (12) each supporting the sets are parallel to each other.

8. Device according to claim 7, characterised in that said two portions (12a, 12b) of the attaching wire (12) are connected to each other by another portion with the shape of a U of the attaching wire (12) enclosing the protuberance (6a) of the jack storage case (6) and situated inside a plane perpendicular to the two portions (12a, 12b) of the attaching wire (12).

9. Device according to one of claims 4 to 8, characterised in that the attaching means (12) of the case (6) are embodied from a single wire.

10. Device according to one of claims 5 to 9, characterised in that the attaching wire (12) has a portion (12d, 12e) passing above the upper element (15, 16) of each of the sets of supports (13, 14).
